# EUROPÄISCHE PATENTANMELDUNG

(11) **EP 4 215 328 A1**
(43) Veröffentlichungstag der Anmeldung: **26.07.2023**
(21) Anmeldenummer: 22211786.3
(22) Anmeldetag: 06.12.2022
(51) Int. Cl.: B29B 7/18, B29B 7/28, B29B 7/74, B29B 7/82, G01J 5/00, G01K 1/00

(54) **VERFAHREN SOWIE VORRICHTUNG UND COMPUTERPROGRAMMPRODUKT ZUR HERSTELLUNG UND TEMPERATURBESTIMMUNG EINER KAUTSCHUKMISCHUNG**

(30) Priorität: 25.01.2022 DE 102022200813
(71) Anmelder: Continental Reifen Deutschland GmbH, 30165 Hannover (DE)
(72) Erfinder: Rennmann, Tim, 30165 Hannover (DE); Glinz, Florian, 30165 Hannover (DE); Glynska, Jelena, 30165 Hannover (DE); Cai, Xiaoke, 30165 Hannover (DE)
(74) Vertreter: Continental Corporation

(57) **Zusammenfassung**

Verfahren zur Herstellung einer Kautschukmischung (4) in einer Mischeinrichtung (1), umfassend die Verfahrensschritte:
- Schritt 1 (S1): Einstellen mindestens eines Herstellungsparameters (16) zur Herstellung einer Kautschukmischung (4),
- Schritt 2 (S2): Herstellen einer Kautschukmischung (4) in einer ersten Mischkammer (2),
- Schritt 3 (S3): Übergeben der Kautschukmischung (4) von der ersten Mischkammer (2) in eine zweite Mischkammer (3),
- Schritt 4 (S4): Messen mindestens einer Oberflächentemperatur (14) der Kautschukmischung (4) mittels einer Einrichtung zum Detektieren von elektromagnetischer Strahlung (22)
dadurch gekennzeichnet, dass
die Oberflächentemperatur (14) der Kautschukmischung (4) während eines Mischvorgangs in der zweiten Mischkammer (3) gemessen wird.

## Beschreibung

Die Erfindung betrifft ein Verfahren zur Herstellung einer Kautschukmischung in einer Vorrichtung mit zwei Mischkammern. Ferner betrifft die Erfindung eine Mischeinrichtung für die Herstellung der Kautschukmischung sowie ein Computerprogrammprodukt zum Durchführen des Verfahrens.

Ein gängiges Verfahren für die Herstellung einer Kautschukmischung ist in der EP 0 277 558 B1 beschrieben. Das beschriebene Verfahren ist ein einstufiges Verfahren. Dabei wird zuerst eine Grundmischung und dann eine Fertigmischung hergestellt. In der EP 0 277 558 B1 wird die Grundmischung in einer ersten Mischkammer hergestellt, die typischerweise ein Stempelkneter ist. Durch zwei Rotoren des Stempelkneters wird der Kautschuk erwärmt und plastifiziert.

In bekannten Verfahren wird der Kautschuk in einem kühlen Zustand dem Stempelkneter zugeführt. Nach Einführen des Kautschuks verschließt ein Stempel die Eintrittsöffnung. Durch das Verschließen der Eintrittsöffnung wird ein erhöhter Druck und somit eine erhöhte Temperatur in dem Stempelkneter erreicht, so dass der Kautschuk typischerweise bereits mit nicht-reaktiven Zusatzstoffen versetzt, erwärmt, plastifiziert und durchmischt wird.

Im zweiten Schritt der Kautschukherstellung, typischerweise in einem stempellosen Mischer, werden die für das Vulkanisieren notwendigen reaktiven Zusatzstoffe der Kautschukmischung zugeführt. Der Mischprozess findet bei einer geringeren Temperatur statt, damit die reaktiven Zusatzstoffe nicht aktiviert werden und sich vernetzen. Die in dem Stempelkneter hergestellte Kautschukmischung weist eine Temperatur auf, bei der die reaktiven Zusatzstoffe sich vernetzen, und muss gekühlt werden.

Eine qualitativ hochwertige Kautschukmischung ist nur herstellbar, wenn neben einer homogenen Durchmischung mit einer Einarbeitung und homogenen Verteilung von Zusatzstoffen auch eine homogene Temperaturverteilung innerhalb der Kautschukmischung vorliegt. Dies ist bei bekannten Verfahren, die die Temperatur über in die Mischkammer ragende Messsensoren, wie PT 100 Sensoren, messen, nur eingeschränkt ermittelbar und einstellbar, da diese Sensoren aufgrund der Einbausituation ein träges Ansprechverhalten aufweisen sowie Messwerte ausgeben, die nicht der aktuellen Temperatur der Kautschukmischung entsprechen. Weiterhin ist die Wärmeerzeugung durch Reibung der Kautschukmischung an Messensoren variabel und verursacht eine nicht vorhersagbare Varianz im Messergebnis. Ein Regeln des Mischprozesses ist nur eingeschränkt möglich.

Vor diesem Hintergrund liegt der Erfindung die Aufgabe zugrunde, ein Verfahren, eine Vorrichtung, ein Computerprogrammprodukt sowie eine Verwendung einer Einrichtung zum Detektieren von elektromagnetischer Strahlung zur Herstellung einer Kautschukmischung zu verbessern.

Diese Aufgabe wird gelöst mit einem Verfahren gemäß den Merkmalen des Patentanspruches 1, einer Vorrichtung, einem Computerprogrammprodukt sowie einer Verwendung einer Einrichtung zum Detektieren von elektromagnetischer Strahlung gemäß den nebengeordneten Ansprüchen. Die Unteransprüche betreffen besonders zweckmäßige Weiterbildungen der Erfindung.

Erfindungsgemäß ist ein Verfahren zur Herstellung einer Kautschukmischung mit folgenden Schritten vorgesehen:
Schritt 1: Einstellen mindestens eines Herstellungsparameters zur Herstellung einer Kautschukmischung,
Schritt 2: Herstellen einer Kautschukmischung in einer ersten Mischkammer,
Schritt 3: Übergeben der Kautschukmischung von der ersten Mischkammer in eine zweite Mischkammer,
Schritt 4: Messen mindestens einer Oberflächentemperatur der Kautschukmischung mittels einer Einrichtung zum Detektieren von elektromagnetischer Strahlung, wobei die Oberflächentemperatur der Kautschukmischung während eines Mischvorgangs in der zweiten Mischkammer gemessen wird.

Die Mischvorrichtung für die Herstellung einer Kautschukmischung weist eine erste und eine zweite Mischkammer auf. In der ersten Mischkammer wird eine erste Kautschukmischung hergestellt, welche meist als Grundmischung bezeichnet wird. Diese Grundmischung wird der zweiten Mischkammer übergeben, so dass aus der ersten Kautschukmischung eine zweite Kautschukmischung hergestellt wird. Die Herstellung der zweiten Kautschukmischung findet in der zweiten Mischkammer statt.

Alternativ kann eine Kautschukmischung in einer einzigen Mischkammer hergestellt werden, in der die Oberflächentemperatur mittels einer Einrichtung zum Detektieren von elektromagnetischer Strahlung erfasst wird.

Das Messen der Oberflächentemperatur der Kautschukmischung erfolgt mittels einer Einrichtung zum Detektieren von elektromagnetischer Strahlung. Hierdurch wird eine einfach durchzuführende sowie genaue und reproduzierbare Messung der Oberflächentemperatur der Kautschukmischung erreicht. Erfindungsgemäß wird eine erhöhte Effizienz des Herstellungsprozesses durch die Reduzierung von manuellen Messungen ermöglicht.

Erfindungsgemäß wird die Oberflächentemperatur der Kautschukmischung beim Mischvorgang in der zweiten Mischkammer gemessen. Hierfür ist erforderlich, dass die Einrichtung zum Detektieren von elektromagnetischer Strahlung zwischen der ersten und der zweiten Mischkammer angeordnet ist. Ein Messsensor, der die Oberfläche der Kautschukmischung beim Überführen aus der zweiten Mischkammer misst, ist hierzu nicht in der Lage. Weiterhin weisen bekannte, in die Mischkammer ragende Messsensoren eine zeitliche Verzögerung sowie Messfehler durch eine Ableitung der Wärme durch den Messsensors an die Umgebung auf. Durch die besonders genaue Temperaturmessung mittels der Einrichtung zum Detektieren von elektromagnetischer Strahlung ist einerseits eine besonders hochwertige Kautschukmischung herstellbar, da ein Mischvorgang mit einer hohen Leistung und einer hohen Dauer durchgeführt werden kann, ohne dass zulässige Temperaturen überschritten werden. Ein überschreiten von zulässigen Temperaturen wird vermieden. Andererseits kann ein besonders zeiteffizientes und damit kostengünstiges Verfahren durchgeführt werden, da der Mischvorgang bei hohen Leistungen durchgeführt werden kann, ohne dass der Mischvorgang zur Überschreitung von zulässigen Temperaturen der Kautschukmischung führt.

In einer vorteilhaften Ausführungsform wird in einem Schritt 5 der Herstellungsparameter bewertet und/oder angepasst. Diese Anpassung erfolgt anhand eines Messwertes, der bei dem Messen der Oberflächentemperatur ermittelt wird.

Anhand der Bewertung des Herstellungsparameters können Rückschlüsse auf die Güte des Verfahrens gezogen werden, die zu einer Erhöhung der Produktqualität führen. Alternativ oder zusätzlich können die Herstellungsparameter zur Erhöhung der Produktqualität direkt, bevorzugt automatisiert, angepasst werden.

In einer weiteren vorteilhaften Ausführungsform ist das Messen der Oberflächentemperatur eine zweidimensionale Messung der Oberfläche der Kautschukmischung. Dabei ist der Messwert, der bei dem Messen der Oberflächentemperatur ermittelt wird, eine Wertematrix. Das Anpassen des Herstellungsparameters erfolgt dann anhand der Wertematrix.

Das Messen der Oberflächentemperatur in zwei Dimensionen hat den Vorteil, dass eine momentane Abbildung der Temperaturverteilung auf der Oberfläche der Kautschukmischung erzeugt wird. Hierdurch sind Inhomogenitäten der Temperaturverteilung nunmehr sichtbar und können bewertet und gegebenenfalls durch Anpassung des Herstellungsparameters verringert werden.

In einer weiteren vorteilhaften Ausführungsform wird vor dem Anpassen des Herstellungsparameters ein Vergleich der Wertematrix mit einer Sollmatrix durchgeführt. Das Bewerten und gegebenenfalls Anpassen des Herstellungsparameters wird dann anhand des Vergleichsergebnisses durchgeführt. Die Schritte 1 bis 5 werden wiederholt, bis die Wertedifferenz jedes Matrixelements zwischen der Wertematrix und der Sollmatrix kleiner als 10 K, bevorzugt kleiner als 5 K und weiter bevorzugt kleiner als 3 K ist. Dabei erfolgt das Wiederholen der Schritte 1 bis 5 iterativ, bevorzugt durch Maschinenlernen.

Die gemessenen Temperaturwerte der Oberfläche der Kautschukmischung werden durch Iteration oder durch Maschinenlernen in jedem Wiederholungsschritt derart angepasst, dass die Wertematrix sich der Sollmatrix annähert. Ein Ende der Wiederholung ist erst dann gegeben, wenn der Vergleich jedes Matrixelements der Wertematrix mit dem zugehörigen Matrixelement der Sollmatrix zu einer Wertedifferenz kleiner als 10 K, bevorzugt kleiner als 5 K und weiter bevorzugt kleiner als 3 K führt. Ein besonders genau reproduzierbarer Herstellungsprozess mit einer hohen Güte wird ermöglicht.

In einer weiteren vorteilhaften Ausführungsform berücksichtigt der Vergleich der Wertematrix mit der Sollmatrix eine Offsetmatrix. Hierbei ist die Offsetmatrix zeitlich variabel. Die Sollmatrix weist keine zeitliche Abhängigkeit auf. Die Sollmatrix stellt eine erwünschte Temperaturverteilung auf der Oberfläche der Kautschukmischung dar.

In einer weiteren vorteilhaften Ausführungsform weist die Offsetmatrix eine theoretische Modellierung oder eine Referenzmessung eines Umgebungsparameters während des Mischvorgangs in der zweiten Mischkammer auf. Alternativ kann die Offsetmatrix beides aufweisen, eine theoretische Modellierung und eine Referenzmessung. Dabei kann der Umgebungsparameter einen Transmissionswert, der von dem Staubgehalt der Luft abhängig ist, oder einen Emissionswert der Kautschukmischung umfassen. Alternativ kann der Umgebungsparameter beides enthalten, den Transmissionswert und den Emissionswert. Alternativ kann der Umgebungsparameter eine Drehzahl der Rotoren berücksichtigen. Eine hohe Drehzahl der Rotoren führt zu einem vermehrten Erzeugen von neuen Oberflächen sowie zu einem schnelleren Messen eines aus dem Rotorbereich abgelösten Hotspots.

In dem Bereich zwischen der ersten Mischkammer und der zweiten Mischkammer ist aufgrund der Luftverhältnisse die Absorption für infrarote Strahlung hoch. Eine Verfälschung der Messergebnisse ist hierdurch gegeben. Bei einer Anpassung des Herstellungsparameters ist der Messfehler bei der Anpassung des Herstellungsparameters zu berücksichtigen um beispielweise die Kautschuktemperatur genau zu bestimmen. Die Auswirkung von Messfehlern aufgrund von Transmissions- und Emissionseffekten wird verringert und ein besonders genau kontrollierbarer Prozess wird ermöglicht.

In einer weiteren vorteilhaften Ausführungsform weist die Offsetmatrix eine theoretische Modellierung oder eine Referenzmessung eines Zustandsparameters während des Mischvorgangs in der zweiten Mischkammer auf. Alternativ kann die Offsetmatrix beides enthalten, eine theoretische Modellierung und eine Referenzmessung. Dabei umfasst der Zustandsparameter bevorzugt ein Verformungsverhalten der Kautschukmischung oder eine Kerntemperatur der Kautschukmischung oder eine Konsistenz der Kautschukmischung. Alternativ umfasst der Zustandsparameter eine Oberflächenbeschaffenheit, wobei unter Oberflächenbeschaffenheit insbesondere optische Eigenschaften wie ein Glanzgrad, eine Oberflächenrauheit oder ein Farbton verstanden werden. Alternativ umfasst der Zustandsparameter eine Kombination aus Verformungsverhalten, Kerntemperatur und Konsistenz. Zudem umfasst die Konsistenz der Kautschukmischung insbesondere eine Kompaktheit, eine Krümeligkeit und/oder eine Klebrigkeit.

Das Messen der elektromagnetischen Strahlung in zwei Dimensionen führt zu einer Momentaufnahme der Verhältnisse auf der Oberfläche der Kautschukmischung. Hierdurch lassen sich unterschiedliche Vorgänge während des Mischvorgangs erkennen, beispielsweise ob die Oberfläche aufreißt, ob Krümeligkeit oder Klebrigkeit vorliegt, oder ob eine Kompaktheit vorliegt. Bricht beispielsweise die Oberfläche auf, so werden in der zweidimensionalen Messung Flächen abgebildet, die eine Oberflächentemperatur aufweisen, welche angenähert die innere Temperatur, die sogenannte Kerntemperatur, wiedergeben. Hierdurch können besonders genaue Rückschlüsse auf die Kerntemperatur der Kautschukmischung gezogen werden, was zu einer Verbesserung der Prozessführung und Produktqualität führt.

In einer weiteren vorteilhaften Ausführungsform ist der Umgebungsparameter und/oder der Zustandsparameter zeitabhängig.

Hinsichtlich des Umgebungsparameters oder des Zustandsparameters oder hinsichtlich beider Parameter wird eine Auswertung der Offsetmatrix durchgeführt. Diese Auswertung der Offsetmatrix erfolgt vor dem Vergleich der Wertematrix mit der Sollmatrix. Zudem ist die Auswertung zeitabhängig. Der Vergleich der Wertematrix mit der Sollmatrix wird dann anhand der Auswertung durchgeführt. Die Auswertung erfolgt iterativ und/oder vorzugsweise durch Maschinenlernen.

Der Umgebungsparameter umfasst insbesondere den Transmissionswert, der beispielsweise von dem Staubgehalt der Luft abhängig ist. Die Staubentwicklung oberhalb und in der zweiten Mischkammer ändert sich während des Herstellungsprozesses und führt zu einem zeitabhängigen Umgebungsparameter. Durch das Berücksichtigen der Variabilität der Parameter über die Zeit, kann dies bei der Ermittlung der Herstellungsparameter berücksichtigt werden, so dass zu jedem Zeitpunkt des Herstellungsprozesses ein besonders genau kontrollierter Prozess durchgeführt wird.

Der Zustandsparameter umfasst insbesondere das Komponentenverhalten. Das Komponentenverhalten einer Kautschukmischung zeigt unterschiedliche Strukturen, die sich mit der Zeit ändern. Hierbei können sich beispielsweise die Krümeligkeit mit der Klebrigkeit abwechseln. Auch eine Bewertung in wie weit Zusatzstoffe in die Kautschukmischung eingearbeitet sind so wie ihre Verteilung in der Kautschukmischung beziehungsweise in wie fern die Zusatzstoffe dispergiert sind kann vorgenommen werden. Das Herstellungsverfahren kann zusätzlich anhand der Zustandsparameter bewertet und geregelt werden, was zu einer Erhöhung der Prozessqualität führt.

Der Herstellungsparameter kann ein Parameter der zweiten Mischkammer sein.

Das Messen der Oberflächentemperatur während des Mischvorgangs in der zweiten Mischkammer hat den Vorteil, dass der Mischprozess angepasst werden kann, und zwar durch Ändern des Herstellungsparameters in der zweiten Mischkammer. Dies führt zu einer Verbesserung des Mischergebnisses in der zweiten Mischkammer und somit zu einer Verbesserung der Qualität der Kautschukmischung.

Erfindungsgemäß wird eine Mischeinrichtung zum Ausführen des erfindungsgemäßen Verfahrens zur Verfügung gestellt. Die Mischeinrichtung umfasst eine erste Mischkammer und eine zweite Mischkammer. Die erste Mischkammer ist zum Herstellen einer Kautschukmischung ausgebildet. Die zweite Mischkammer ist zur Aufnahme der Kautschukmischung ausgebildet und weist einen Aufnahmebereich auf. Zwischen dem Aufnahmebereich der zweiten Mischkammer und der ersten Mischkammer ist ein Kanal angeordnet. Der Kanal ist zur Überführung der Kautschukmischung ausgebildet. Erfindungsgemäß weist der Kanal eine Einrichtung zum Detektieren von elektromagnetischer Strahlung auf, wodurch eine besonders genaue, zuverlässige und reproduzierbare Temperaturmessung einer Oberfläche einer Kautschukmischung ermöglicht wird.

In einer vorteilhaften Ausführungsform ist die Einrichtung zum Detektieren von elektromagnetischer Strahlung ein elektromagnetischer Strahlungssensor. Bevorzugt ist die Einrichtung zum Detektieren von elektromagnetischer Strahlung eine Infrarot-Messeinheit, weiter bevorzugt eine Infrarotkamera. Die Infrarotkamera erfasst dabei bevorzugt einen Wellenlängenbereich von 0,78 µm bis 500 µm, vorzugsweise einen Wellenlängenbereich von 0,78 µm bis 50 µm, weiter vorzugsweise einen Wellenlängenbereich von 0,78 µm bis 3 µm, weiter vorzugsweise einen Wellenlängenbereich von 0,78 µm bis 1,4 µm, wobei die Einrichtung zum Detektieren von elektromagnetischer Strahlung auf den Aufnahmebereich der zweiten Mischkammer gerichtet ist.

Eine Infrarot-Messeinheit und insbesondere eine Infrarotkamera ermöglichen ein kostengünstiges und genaues Messen der Oberflächentemperatur der Kautschukmischung, bevorzugt sogar eine zweidimensionale Messung der Oberflächentemperatur. Hierbei hat sich ein Wellenlängenbereich von 0,78 µm bis 1,4 µm als besonders vorteilhaft herausgestellt. Das Ausrichten der Einrichtung zum Detektieren von elektromagnetischer Strahlung auf den Aufnahmebereich der zweiten Mischkammer gewährleistet, dass der Mischvorgang in der zweiten Mischkammer abgebildet werden kann.

In einer weiteren vorteilhaften Ausführungsform ist eine Kanalwand des Kanals zwischen der Einrichtung zum Detektieren von elektromechanischer Strahlung und dem Aufnahmebereich angeordnet. Die Kanalwand weist einen Spalt auf, um eine Abbildung des Aufnahmebereichs mittels der Einrichtung zum Detektieren von elektromechanischer Strahlung zu gewährleisten.

Insbesondere in einer Umgebung mit hoher Staubbelastung, wie diese zwischen der ersten Mischkammer und der zweiten Mischkammer auftritt, ist ein bestmöglicher Schutz der Einrichtung zum Detektieren von elektromechanischer Strahlung erforderlich. Der Spalt ist so ausgebildet, dass nur der für die Abbildung sensitive Teil der Messeinrichtung durch die Staubentwicklung belastet wird. Weiter bevorzugt ist ein Gasstrom derart am Spalt vorgesehen, dass der sensitive Teil der Messeinrichtung von dem Gasstrom umspült wird und so einer weiter verringerten Staubbelastung ausgesetzt wird. Um vorhandene Staubbelastung auf dem sensitiven Teil der Messeinrichtung zu detektieren und deren Auswirkung zu verringern, ist weiterhin bevorzugt, dass mittels eines Referenzstrahlers die Staubbelastung auf dem sensitiven Teil der Messeinrichtung ermittelt wird. Das mit dem Referenzstrahler erzeugte Messergebnis kann für eine Anpassung der Auswertung der ermittelten Oberflächentemperatur und/oder für das Ausgeben eines Signals, das eine Reinigung des sensitiven Teils der Messeinrichtung notwendig ist, verwendet werden.

In einer weiteren vorteilhaften Ausführungsform ist die erste Mischkammer ein Grundmischer. In dem Grundmischer wird der Kautschuk erwärmt und plastifiziert. Nicht reaktive Zusatzstoffe können dem Grundmischer bereits zugeführt werden. Der Grundmischer weist bevorzugt einen Stempelkneter auf. Die zweite Mischkammer ist ein Fertigmischer. Der Fertigmischer weist bevorzugt einen stempellosen Kneter auf. In dem Fertigmischer werden die reaktiven Zusatzstoffe zugeführt. Damit die reaktiven Zusatzstoffe nicht aktiviert werden und es nicht bereits während des Mischvorgangs zu einer Vernetzung der reaktiven Zusatzstoffe und somit zu einer frühzeitigen Vulkanisation kommt, wird der Mischvorgang in der zweiten Mischkammer unter einer kühleren Temperatur als in der ersten Mischkammer durchgeführt. Hierfür ist der Fertigmischer meist als stempelloser Kneter ausgeführt. Zudem ist der Fertigmischer mit größeren Wandflächen versehen, um einen stärken Kühleffekt über die Wandflächen zu erzeugen. Alternativ werden die nicht-reaktiven Zusatzstoffe der zweiten Mischkammer zugeführt.

In einer weiteren vorteilhaften Ausführungsform ist die erste Mischkammer eine obere Mischkammer. Die erste Mischkammer ist oberhalb, insbesondere senkrecht oberhalb der zweiten Mischkammer angeordnet. Dabei ist die zweite Mischkammer bevorzugt eine untere Mischkammer. Hierbei ist die Mischeinrichtung bevorzugt ein Tandemmischer. Die erste Mischkammer und die zweite Mischkammer sind unterschiedlich ausgestaltet. Alternativ sind die erste Mischkammer und die zweite Mischkammer baugleich ausgestaltet.

Erfindungsgemäß wird ein Computerprogrammprodukt zum Ermitteln und Anpassen von Verfahrensparametern der erfindungsgemäßen Mischeinrichtung zur Verfügung gestellt. Das Computerprogrammprodukt umfasst Befehle, die bei der Ausführung des Programms durch zumindest eine Prozessoreinheit die Mischeinrichtung veranlasst, ein erfindungsgemäßes Verfahren auszuführen.

Erfindungsgemäß wird eine Einrichtung zum Detektieren von elektromagnetischer Strahlung, bevorzugt eine Infrarotkamera, zur Verfügung gestellt, die an einer erfindungsgemäßen Mischvorrichtung zum Messen der Temperatur einer Kautschukmischung während eines Mischvorgangs in der zweiten Mischkammer angeordnet werden kann.

Die Erfindung lässt zahlreiche Ausführungsformen zu. Zur Verdeutlichung ihres Grundprinzips sind zwei davon in den Zeichnungen dargestellt und werden nachfolgend beschrieben. Diese zeigen in
Fig. 1 eine schematische Mischeinrichtung mit einer oberen Mischkammer und einer unteren Mischkammer sowie einer dazwischen angeordneten Infrarotkamera;
Fig. 2 einen Verfahrensablauf zur Herstellung einer Kautschukmischung.

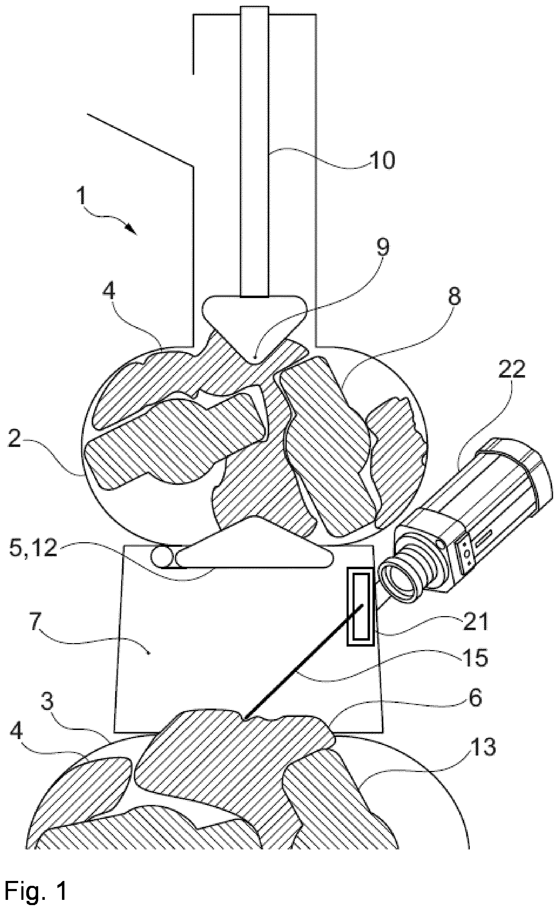

Figur 1 zeigt ein Ausführungsbeispiel einer erfindungsgemäßen Mischeinrichtung 1. Die in Figur 1 dargestellte Ausführungsform ist ein Tandemmischer, der eine erste Mischkammer 2 und eine zweite Mischkammer 3 umfasst. In Figur 1 ist die erste Mischkammer 2 senkrecht oberhalb der zweiten Mischkammer 3 angeordnet. Hierdurch kann eine Kautschukmischung 4, die in der ersten Mischkammer 2 hergestellt wurde, schwerkraftgetrieben in die zweite Mischkammer 3 übertragen werden. Zwischen der Austrittsöffnung 5 der ersten Mischkammer 2 und dem Aufnahmebereich 6 der zweiten Mischkammer 3 ist hierzu ein Kanal 7 angeordnet. Dieser Kanal 7 kann auch eine Schurre sein.

Die erste Mischkammer 2 ist als ein Stempelkneter ausgebildet. Der Stempelkneter weist vorliegend zwei Rotoren 8 auf, so dass in der ersten Mischkammer 2 ein Druck und eine Temperatur aufgebaut wird. Die Temperatur wird durch die Scherung, die die zwei Rotoren 8 in der Kautschukmischung 4 erzeugen, erhöht, so dass die Kautschukmischung 4 plastifiziert wird. Dabei treten Temperaturen von maximal 190 °C auf. Die erste Mischkammer 2 ist eintrittsseitig und austrittsseitig durch ein bewegbares Element verschlossen. Die Eintrittsöffnung 9 wird durch einen Stempel 10 geschlossen, wohingegen die Austrittsöffnung 5 durch einen schwenkbaren Sattel 12 geschlossen wird. In der ersten Mischkammer 2 können nicht-reaktive Zusatzstoffe bereits der Kautschukmischung 4 zugeführt werden.

Die in der ersten Mischkammer 2 hergestellte Kautschukmischung 4 wird über den Kanal 7 in die zweite Mischkammer 3 überführt. Die zweite Mischkammer 3 ist ein stempelloser Kneter. Der stempellose Kneter arbeitet bei Umgebungsdruck. Die zweite Mischkammer 3 ist auf der Unterseite durch einen schwenkbaren Sattel 12 abgeschlossen, um die Kautschukmischung 4 beim Mischen am Austreten zu hindern. Die in der zweiten Mischkammer 3 hergestellte Kautschukmischung 4 wird als Fertigmischung bezeichnet.

In der zweiten Mischkammer 3 werden die reaktiven Zusatzstoffe der Kautschukmischung 4 beigefügt. Damit kein Vernetzen und somit keine frühzeitige Vulkanisation stattfindet, findet das Mischen in der zweiten Mischkammer 3 unter einer niedrigeren Temperatur als in der ersten Mischkammer 2 statt. Die Kautschukmischung 4 weist eine geringere Temperatur in der zweiten Mischkammer 3 auf, da die zweite Mischkammer 3 ein größeres Volumen aufweist mit daraus resultierender größerer Oberfläche der Wände der zweiten Mischkammer 2, was zu einer größeren Wärmeabgabe an die Umgebung führt. Bei gleicher Leistung der Rotoren 8 der ersten Mischkammer 2 und der Rotoren 13 der zweiten Mischkammer 3 stellt sich eine geringere Temperatur der Kautschukmischung 4 ein.

Die Zusatzstoffe werden vor der Zugabe nicht erwärmt. Das Zugeben der nicht erwärmten Zusatzstoffe in die zweite Mischkammer 3 führt dazu, dass Inhomogenitäten hinsichtlich der Temperatur in der Kautschukmischung 4 in der zweiten Mischkammer 3 auftreten. Ferner können bereits Inhomogenitäten aufgrund der Herstellung der Kautschukmischung 4 in der ersten Mischkammer 2 vorhanden sein. Diese Inhomogenitäten führen zu einer Verringerung der Qualität der durch die Mischeinrichtung 1 hergestellten Kautschukmischung 4. Damit die Zusatzstoffe, insbesondere die reaktiven Zusatzstoffe, sich gleichmäßig in der Kautschukmischung 4 verteilen, ist eine homogene Temperaturverteilung für eine hohe Produktqualität relevant.

Anstatt die Mischkammern 2, 3 zum Messen einer Temperatur in bekannter Form manuell zu öffnen, können Messelemente in den Herstellungsprozess integriert werden. Typische Messelemente sind meist "PT 100"-Messelemente, die sowohl in der ersten Mischkammer 2, als auch in der zweiten Mischkammer 3 angeordnet sind. Die "PT 100"-Messelemente messen die Kautschukmischung 4 jeweils nur an einer Stelle, so dass Inhomogenitäten hinsichtlich der Temperatur nur eingeschränkt erfasst werden können.

Eine weitere Möglichkeit, die Temperatur einer Kautschukmischung 4 zu messen, ist die Verwendung eines Infrarot-Scanners. Ein Infrarot-Scanner misst die Infrarotstrahlung, die elektromagnetische Strahlung im Bereich von 0,78 - 500 µm. Der Infrarot-Scanner misst Punkt für Punkt und rastert eine Oberfläche des Kautschuks ab. Der Scan ergibt ein zweidimensionales Bild der Oberfläche der Kautschukmischung 4. Das Messen "Punkt für Punkt" hat zur Folge, dass ein vollständiges Bild sich erst ergibt, wenn der Scanner die gesamte Oberfläche der Kautschukmischung 4 abgerastert hat. Bei einem nicht bewegbaren Objekt würde eine Momentaufnahme vorliegen. Dies würde beispielsweise der Fall sein, wenn der Herstellungsprozess unterbrochen wird, um eine Scanaufnahme mit dem Infrarot-Scanner durchzuführen. Der Nachteil ist hierbei, dass der Herstellungsprozess beendet oder unterbrochen werden muss. Ein Infrarot-Scan während des Herstellungsprozesses würde zu einer Überlagerung des Infrarot-Scans mit der Mischbewegung führen. Inhomogenitäten hinsichtlich der Temperatur sind hierdurch nur eingeschränkt zu erfassen. Eine hohe Variation und eine geringe Aussagekraft der Messergebnisse ist der Fall. Zudem ist durch die fehlende Momentaufnahme keine optische Bewertung des Mischzustandes in der zweiten Mischkammer 3 gegeben.

Es wird die Temperatur der Oberfläche der Kautschukmischung 4 während eines Mischvorgangs in der zweiten Mischkammer 3 gemessen. Die Messung der Oberflächentemperatur 14 der Kautschukmischung 4 erfolgt mittels einer Einrichtung zum Detektieren von elektromagnetischer Strahlung 15, die eine Infrarotkamera ist. Die Infrarotkamera umfasst einen Wellenlängenbereich von 0,78 µm bis 1,4 µm.

Ferner ist in dem vorliegenden Ausführungsbeispiel die Infrarotkamera auf den Aufnahmebereich 6 der zweiten Mischkammer 2 gerichtet. Hierdurch kann die Oberflächentemperatur 14 der Kautschukmischung 4 während eines Mischvorgangs in der zweiten Mischkammer 2 gemessen werden. Eine Messung in 2 Dimensionen bildet die zu messende Oberfläche einheitlich zur gleichen Zeit ab, wobei als "gleichzeitig" eine so kurze Zeitspanne verstanden wird, dass die Kautschukmischung 4 in dieser Zeitspanne keine messergebnisrelevante Bewegung ausführt. Somit stellt die Abbildung eine Momentaufnahme des Mischvorgangs in der zweiten Mischkammer 3 dar. Neben der gemessenen Temperaturverteilung wird zusätzlich das Komponentenverhalten der Kautschukmischung 4 erfasst. Für das Erfassen des Komponentenverhaltens ist es empfehlenswert, dass mehrere Momentaufnahmen abgebildet werden. Bereits aus einer Momentaufnahme kann anhand der vorliegenden Temperaturverteilung ein Rückschluss auf das Komponentenverhalten gezogen werden. Aus mehreren Momentaufnahmen kann jedoch mit erhöhter Genauigkeit darauf geschlossen werden, ob das Komponentenverhalten der Kautschukmischung 4 kompakt, krümelig oder klebrig ist. Beispielsweise kann durch das Auswerten mehrerer Momentaufnahmen ein Aufreißen der Oberfläche erkannt werden, woraus sich wiederum Rückschlüsse auf die Kerntemperatur herleiten lassen.

In dem vorliegenden Ausführungsbeispiel wird der Herstellungsparameter 16 angepasst. Diese Anpassung erfolgt anhand eines Messwertes 17, der bei dem Messen der Oberflächentemperatur 14 der Kautschukmischung 4 ermittelt wird. Der Herstellungsparameter 16 ist ein Parameter der zweiten Mischkammer 3. Vor dem Anpassen des Herstellungsparameters 16 wird ein Vergleich durchgeführt. Die erfassten Messwerte 17, die in zwei Dimensionen gemessen werden, bilden eine Wertematrix 18. Die Wertematrix 18 wird mit einer Sollmatrix 19 verglichen. Diese Sollmatrix 19 zeigt eine Soll-Temperaturverteilung der Oberflächentemperatur 14 der Kautschukmischung 4 auf. Eine Anpassung des Herstellungsparameters 16 erfolgt derart, dass sich die Wertematrix 18 der Sollmatrix 19 annähert. Dies geschieht dadurch, dass jedes Matrixelement der Wertematrix 18 mit dem zugehörigen Matrixelement der Sollmatrix 19 verglichen wird. Eine Annäherung ist dann erfolgt, wenn jedes Matrixelement der Wertematrix 18 mit dem zugehörigen Matrixelement der Sollmatrix 19 eine Wertedifferenz von weniger als 10 K aufweist. Vorzugsweise wird eine Wertedifferenz von kleiner als 5 K und weiter bevorzugt von kleiner als 3 K angestrebt.

Damit eine Annäherung der Wertematrix 18 an die Sollmatrix 19 erfolgen kann, ist mindestens ein Herstellungsparameter 16 so anzupassen, dass neben den einzelnen Werten sich auch die Verteilung der Messwerte 17 der Verteilung der Sollmatrix 19 annähert. Diese Annäherung kann zum einen iterativ, oder zum anderen durch Maschinenlernen erfolgen. Mittels künstlicher Intelligenz ist eine entsprechende Anpassung der beiden Verteilungen möglich.

Beim Messen mittels Infrarotstrahlung ist zu berücksichtigen, dass der Bereich zwischen der Infrarotkamera und dem zu messenden Objekt nicht zwingend frei von absorbierenden Elementen ist. In dem Bereich zwischen der ersten Mischkammer 2 und der zweiten Mischkammer 3, der durch einen Kanal 7 umrandet ist, liegt typischerweise ein hoher Staubgehalt vor. Dieser hohe Staubgehalt führt zu einer Absorption der Infrarotstrahlung.

Die Staubentwicklung in dem Kanal 7 zwischen der ersten Mischkammer 2 und der zweiten Mischkammer 3 sowie das Komponentenverhalten der Kautschukmischung 4 können durch theoretische Modelle oder durch Referenzmessungen kalibriert werden. Hierbei wird berücksichtigt, dass beispielweise die zugegebenen reaktiven Zusatzstoffe sowie in der Kautschukmischung 4 nicht gebundene Komponenten aus der ersten Mischkammer sich zu Beginn des Prozesses vermehrt in der Luft befinden und über die Prozesszeit von der Kautschukmischung 4 aufgenommen werden. Der den Staubgehalt der Luft beschreibende Parameter wird als Umgebungsparameter bezeichnet, der neben dem Transmissionswert auch den Emissionswert der Kautschukmischung 4 umfasst. Der das Komponentenverhalten der Kautschukmischung 4 beschreibende Parameter wird als Zustandsparameter bezeichnet und umfasst das Verformungsverhalten der Kautschukmischung 4, die Kerntemperatur sowie die Konsistenz der Kautschukmischung 4. Sowohl der Staubgehalt der Luft, als auch das Komponentenverhalten der Kautschukmischung 4 sind von der Zeit abhängig. In dem vorliegenden Ausführungsbeispiel sind daher der Umgebungsparameter sowie der Zustandsparameter zeitabhängig. Eine solche Zeitabhängigkeit des Umgebungsparameters sowie des Zustandsparameters ist nur unsicherheitsbehaftet mit theoretischen Modellen und Referenzmessungen zu erfassen.

In dem vorliegenden Ausführungsbeispiel wird vor dem Vergleich der Wertematrix 18 mit der Sollmatrix 19 eine zeitabhängige Auswertung der Offsetmatrix 20 durchgeführt. Die Auswertung der Offsetmatrix 20 wird hinsichtlich des Umgebungsparameters sowie hinsichtlich des Zustandsparameters durchgeführt. Bei dem Vergleich der Wertematrix 18 mit der Sollmatrix 19 wird über die Offsetmatrix 20 somit der Umgebungsparameter sowie der Zustandsparameter berücksichtigt. Vorliegend sind der Umgebungsparameter sowie der Zustandsparameter zeitabhängig. Ein Vergleich der Wertematrix 18 mit der Sollmatrix 19 erfolgt somit erst, nachdem die zeitabhängigen Umgebungsparameter sowie Zustandsparameter ausgewertet worden sind. Der Vergleich erfolgt dann anhand dieser Auswertung. In dem vorliegenden Ausführungsbeispiel wird die Auswertung durch Maschinenlernen durchgeführt.

Aufgrund dessen, dass zwischen der ersten Mischkammer 2 und der zweiten Mischkammer 3 innerhalb des Kanals 7 ein erhöhter Staubgehalt vorliegt, wird vorliegend die Infrarotkamera durch einen Spalt 21 derart geschützt, dass das Eintrittsfenster der Infrarotkamera der einzige Bereich ist, der der Staubbelastung ausgesetzt ist.

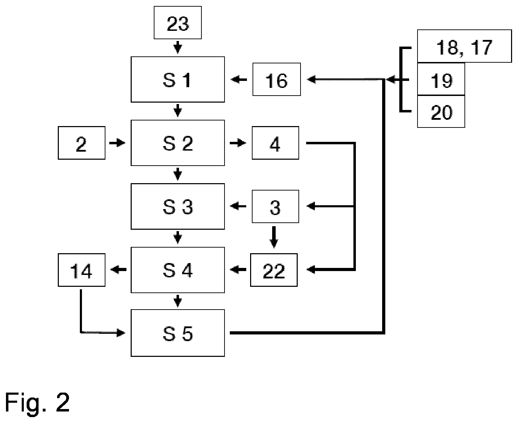

Figur 2 zeigt schematisch einen Ablauf des erfindungsgemäßen Verfahrens zur Herstellung einer Kautschukmischung 4. Im ersten Schritt S1 wird ein Herstellungsparameter 16 zur Herstellung einer Kautschukmischung 4 eingestellt. Im zweiten Schritt S2 wird eine Kautschukmischung 4 in einer ersten Mischkammer 2 hergestellt. Im dritten Schritt S3 wird die Kautschukmischung 4 durch Öffnen des schwenkbaren Sattels 12 von der ersten Mischkammer 2 in eine zweite Mischkammer 3 übergeben. Im vierten Schritt S4 wird mindestens eine Oberflächentemperatur 14 der Kautschukmischung 4 mittels einer Einrichtung zum Detektieren von elektromagnetischer Strahlung 22, die eine Infrarotkamera ist, gemessen. Wobei die Oberflächentemperatur 14 der Kautschukmischung 4 während eines Mischvorgangs in der zweiten Mischkammer 3 gemessen wird. Im fünften Schritt S5 wird der Herstellungsparameter 16 bewertet und/oder angepasst. Die Anpassung erfolgt anhand eines bei dem Messen der Oberflächentemperatur 14 ermittelten Messwertes 17, welcher aufgrund der zweidimensionalen Messung vorliegend eine Wertematrix 18 ist. Unter Berücksichtigung einer Offsetmatrix 20 wird die Wertematrix 18 mit einer Sollmatrix 19 verglichen. Die Sollmatrix 19 zeigt eine Soll-Temperaturverteilung auf. Die Offsetmatrix 20 umfasst die zeitabhängigen Parameter, die die Abbildung einer Oberflächentemperatur 14 einer Kautschukmischung 4 beeinflussen. In Abhängigkeit der Ungleichheit der Wertematrix 18 von der Sollmatrix 19 unter Berücksichtigung der Offsetmatrix 20 wird der Herstellungsparameter 16 in jedem Wiederholungsschritt angepasst. Die Anpassung erfolgt vorliegend durch Maschinenlernen. Ein Computerprogrammprodukt mit einer Prozessoreinheit 23 führt das Verfahren zur Herstellung einer Kautschukmischung 4 aus.

**Bezugszeichenliste**

| | | | |
|---|---|---|---|
| 1 | Mischeinrichtung | S1 | Schritt 1 |
| 2 | erste Mischkammer | S2 | Schritt 2 |
| 3 | zweite Mischkammer | S3 | Schritt 3 |
| 4 | Kautschukmischung | S4 | Schritt 4 |
| 5 | Austrittsöffnung | S5 | Schritt 5 |
| | | | |
| 6 | Aufnahmebereich | | |
| 7 | Kanal | | |
| 8 | Rotoren, erste Mischkammer | | |
| 9 | Eintrittsöffnung, erste Mischkammer | | |
| 10 | Stempel | | |
| | | | |
| 12 | schwenkbarer Sattel | | |
| 13 | Rotoren, zweite Mischkammer | | |
| 14 | Oberflächentemperatur | | |
| 15 | elektromagnetische Strahlung | | |
| | | | |
| 16 | Herstellungsparameter | | |
| 17 | Messwert | | |
| 18 | Wertematrix | | |
| 19 | Sollmatrix | | |
| 20 | Offsetmatrix | | |
| | | | |
| 21 | Spalt | | |
| 22 | Einrichtung zum Detektieren von elektromagnetischer Strahlung | | |
| 23 | Prozessoreinheit | | |

## Patentansprüche

1. Verfahren zur Herstellung einer Kautschukmischung (4) in einer Mischeinrichtung (1), umfassend die Verfahrensschritte:
- Schritt 1 (S1): Einstellen mindestens eines Herstellungsparameters (16) zur Herstellung einer Kautschukmischung (4),
- Schritt 2 (S2): Herstellen einer Kautschukmischung (4) in einer ersten Mischkammer (2),
- Schritt 3 (S3): Übergeben der Kautschukmischung (4) von der ersten Mischkammer (2) in eine zweite Mischkammer (3),
- Schritt 4 (S4): Messen mindestens einer Oberflächentemperatur (14) der Kautschukmischung (4) mittels einer Einrichtung zum Detektieren von elektromagnetischer Strahlung (22)
**dadurch gekennzeichnet, dass**
die Oberflächentemperatur (14) der Kautschukmischung (4) während eines Mischvorgangs in der zweiten Mischkammer (3) gemessen wird.

2. Verfahren zur Herstellung einer Kautschukmischung (4) nach Anspruch 1, **gekennzeichnet durch**:
- Schritt 5 (S5): Bewerten und/oder Anpassen des Herstellungsparameters (16) anhand eines bei dem Messen der Oberflächentemperatur (14) ermittelten Messwertes (17).

3. Verfahren zur Herstellung einer Kautschukmischung (4) nach Anspruch 1 oder 2, **dadurch gekennzeichnet, dass** das Messen der Oberflächentemperatur (14) eine zweidimensionale Messung der Oberfläche der Kautschukmischung (4) ist, wobei der bei dem Messen der Oberflächentemperatur (14) ermittelte Messwert (17) eine Wertematrix (18) ist und das Anpassen des Herstellungsparameters (16) anhand der Wertematrix (18) erfolgt.

4. Verfahren zur Herstellung einer Kautschukmischung (4) nach Anspruch 3,
**dadurch gekennzeichnet,**
**dass** vor dem Anpassen des Herstellungsparameters (16) ein Vergleich der Wertematrix (18) mit einer Sollmatrix (19) durchgeführt wird,
wobei das Anpassen des Herstellungsparameters (16) anhand des Vergleichsergebnisses durchgeführt wird,
wobei die Schritte 1 (S1) bis 5 (S5) wiederholt werden, bis die Wertedifferenz jedes Matrixelements zwischen der Wertematrix (18) und der Sollmatrix (19) kleiner als 10 K, bevorzugt kleiner als 5 K und weiter bevorzugt kleiner als 3 K ist,
wobei das Wiederholen der Schritte 1 (S1) bis 5 (S5) iterativ, bevorzugt durch Maschinenlernen, erfolgt.

5. Verfahren zur Herstellung einer Kautschukmischung (4) nach Anspruch 3 oder 4, **dadurch gekennzeichnet, dass** der Vergleich der Wertematrix (18) mit der Sollmatrix (19) eine Offsetmatrix (20) berücksichtigt, wobei die Offsetmatrix (20) zeitlich variabel ist und die Sollmatrix (19) keine zeitliche Abhängigkeit aufweist.

6. Verfahren zur Herstellung einer Kautschukmischung (4) nach Anspruch 5, **dadurch gekennzeichnet, dass** die Offsetmatrix (20) eine theoretische Modellierung und/oder eine Referenzmessung eines Umgebungsparameters während des Mischvorgangs in der zweiten Mischkammer (3) aufweist, wobei der Umgebungsparameter einen insbesondere von dem Staubgehalt der Luft abhängigen Transmissionswert und/oder einen Emissionswert der Kautschukmischung (4) und/oder eine Drehzahl der Rotoren (13) umfasst.

7. Verfahren zur Herstellung einer Kautschukmischung (4) nach Anspruch 5 oder 6, **dadurch gekennzeichnet, dass** die Offsetmatrix (20) eine theoretische Modellierung und/oder eine Referenzmessung eines Zustandsparameters während des Mischvorgangs in der zweiten Mischkammer (3) aufweist, wobei der Zustandsparameter bevorzugt ein Verformungsverhalten der Kautschukmischung (4) und/oder eine Kerntemperatur der Kautschukmischung (4) und/oder eine Oberflächenbeschaffenheit und/oder eine Konsistenz der Kautschukmischung (4) umfasst, wobei die Konsistenz der Kautschukmischung (4) insbesondere eine Kompaktheit, eine Krümeligkeit und/oder eine Klebrigkeit umfasst, wobei Rückschlüsse über die Kerntemperatur von der Konsistenz der Kautschukmischung (4) abhängig sein können.

8. Verfahren zur Herstellung einer Kautschukmischung (4) nach Anspruch 6 oder 7, **dadurch gekennzeichnet, dass**
der Umgebungsparameter zeitabhängig ist und/oder der Zustandsparameter zeitabhängig ist,
wobei vor dem Vergleich der Wertematrix (18) mit der Sollmatrix (19) eine zeitabhängige Auswertung der Offsetmatrix (20) hinsichtlich Umgebungsparameter und/oder Zustandsparameter durchgeführt wird,
wobei der Vergleich der Wertematrix (18) mit der Sollmatrix (19) anhand der Auswertung durchgeführt wird,
wobei die Auswertung iterativ, bevorzugt durch Maschinenlernen erfolgt.

9. Mischeinrichtung (1) zum Ausführen des Verfahrens nach einem der Ansprüche 1 bis 8, umfassend eine erste Mischkammer (2) zum Herstellen einer Kautschukmischung (4) und eine zweite Mischkammer (3) zur Aufnahme der Kautschukmischung (4), wobei die zweite Mischkammer (3) einen Aufnahmebereich (6) aufweist und zwischen dem Aufnahmebereich (6) und der ersten Mischkammer (2) ein Kanal (7) zur Überführung der Kautschukmischung (4) angeordnet ist, **dadurch gekennzeichnet, dass**
der Kanal (7) eine Einrichtung zum Detektieren von elektromagnetischer Strahlung (22) aufweist.

10. Mischeinrichtung (1) nach Anspruch 9, **dadurch gekennzeichnet, dass** die Einrichtung zum Detektieren von elektromagnetischer Strahlung (22) ein elektromagnetischer Strahlungssensor ist, bevorzugt eine Infrarot-Messeinheit, weiter bevorzugt eine Infrarotkamera (17), wobei die Infrarotkamera (17) bevorzugt einen Wellenlängenbereich von 0,78 µm bis 500 µm erfasst, weiter bevorzugt einen Wellenlängenbereich von 0,78 µm bis 50 µm erfasst, weiter bevorzugt einen Wellenlängenbereich von 0,78 µm bis 3 µm erfasst und weiter bevorzugt einen Wellenlängenbereich von 0,78 µm bis 1,4 µm erfasst, wobei die Einrichtung zum Detektieren von elektromagnetischer Strahlung (22) auf den Aufnahmebereich (6) der zweiten Mischkammer (3) gerichtet ist und eine Abbildung des Mischvorgangs in der zweiten Mischkammer (3) gewährleistet.

11. Mischeinrichtung (1) nach Anspruch 9 oder 10, **dadurch gekennzeichnet, dass** eine Kanalwand des Kanals (7) zwischen der Einrichtung zum Detektieren von elektromechanischer Strahlung (22) und dem Aufnahmebereich (6) angeordnet ist, wobei die Kanalwand einen Spalt (21) aufweist, um eine Abbildung des Aufnahmebereichs (6) mittels der Einrichtung zum Detektieren von elektromechanischer Strahlung (22) zu gewährleisten.

12. Mischeinrichtung (1) nach einem der Ansprüche 9 bis 11, **dadurch gekennzeichnet, dass** die erste Mischkammer (2) ein Grundmischer ist, der bevorzugt einen Stempelkneter aufweist und die zweite Mischkammer (3) ein Fertigmischer ist, der bevorzugt einen stempellosen Kneter aufweist.

13. Mischeinrichtung (1) nach einem der Ansprüche 10 bis 12, **dadurch gekennzeichnet, dass** die erste Mischkammer (2) eine obere Mischkammer ist und oberhalb, insbesondere senkrecht oberhalb der zweiten Mischkammer (3), die bevorzugt eine untere Mischkammer ist, angeordnet ist, wobei die Mischeinrichtung (1) bevorzugt ein Tandemmischer (1) ist, wobei die erste Mischkammer (2) und die zweite Mischkammer (3) unterschiedlich oder baugleich ausgestaltet sind.

14. Computerprogrammprodukt zum Ermitteln und Anpassen von Verfahrensparametern einer Mischeinrichtung (1) nach einem der Ansprüche 9 bis 13, umfassend Befehle, die bei der Ausführung des Programms durch zumindest eine Prozessoreinheit (23) diese veranlasst, ein Verfahren zur Herstellung einer Kautschukmischung (4) nach einem der Ansprüche 1 bis 8 auszuführen.

15. Verwendung einer Einrichtung zum Detektieren von elektromagnetischer Strahlung (22) an einer Mischvorrichtung (1) nach einem der Ansprüche 9 bis 13 zum Messen der Temperatur einer Kautschukmischung (4) während eines Mischvorgangs in der zweiten Mischkammer (3).
